(19) Europäisches Patentamt
European Patent Office
Office européen des brevets

(11) **EP 3 860 186 A1**

(12) **EUROPEAN PATENT APPLICATION**
published in accordance with Art. 153(4) EPC

(43) Date of publication:
**04.08.2021 Bulletin 2021/31**

(21) Application number: **18935902.9**

(22) Date of filing: **30.09.2018**

(51) Int Cl.:
**H04W 24/00** (2009.01)

(86) International application number:
**PCT/CN2018/109198**

(87) International publication number:
**WO 2020/062291 (02.04.2020 Gazette 2020/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.**
**Dongguan Guangdong 523860 (CN)**

(72) Inventor: **TANG, Hai**
**Dongguan, Guangdong 523860 (CN)**

(74) Representative: **Ipside**
**7-9 Allées Haussmann**
**33300 Bordeaux Cedex (FR)**

(54) **CONFIGURATION METHOD, COMMUNICATION DEVICE, AND COMPUTER READABLE STORAGE MEDIUM**

(57) A configuration method, a communication device, and a computer readable storage medium; where the above method includes: configuring, in a SMTC period, at least two SMTC measurement windows to obtain SMTC configuration information (S101); and sending the SMTC configuration information to a terminal (S102). The configuration method can improve efficiency and success rate of a measurement.

Configuring, in an SMTC period, at least two SMTC measurement windows to obtain SMTC configuration information — S101

Sending the SMTC configuration information to a terminal — S102

FIG. 3

EP 3 860 186 A1

## Description

### TECHNICAL FIELD

Embodiments of the present application relate to measurement technologies in the field of wireless communication and, in particular, to a configuration method, a communication device, and a computer readable storage medium.

### BACKGROUND

With the development of communication technology, a research on the fifth generation mobile communication technology (5G, 5th Generation) has also begun. The 5G wireless access is called New Radio, or NR for short.

In 5G NR, in order to facilitate a user equipment (User Equipment, UE) to perform a measurement based on a synchronization signal block (SSB, Synchronization Signal Block), a design of a measurement timing configuration based on the SSB (SMTC, SS/PBCH block measurement timing configuration) is introduced. When configuring a measurement object, a network side device can send SMTC configuration information to the UE. The SMTC configuration information is a measurement window for the UE to make a measurement based on the SSB. During an SMTC period, a fixed SMTC measurement window can be used to send the SSB.

In 5G NR, the network side device configures an opportunity of each cell to send its own SSB, and the network side device can send the SSB of each cell in an SMTC window. Then, in the case of unlicensed frequency bands, since each cell needs to determine whether a channel is available based on the LBT process, when the network side device sends the SSB of a cell A, other cells are likely to fails to LBT due to cell A's occupation for the channel. As a result, these cells cannot send the SSBs of their respective cells in the same SMTC measurement window. The SSBs of these cells can only be sent after the LBT in their respective cells is successful, and there is a time delay. When multiple cells appear to delay the transmission of the SSB due to the above reasons, it will be difficult to ensure that the UE finds and completes a measurement of a neighboring cell with a fixed measurement window during the SMTC period, which affects timeliness and success rate of the measurement.

### SUMMARY

Embodiments of the present application expect to provide a configuration method, a communication device, and computer readable storage medium, which can improve efficiency and success rate of a measurement.

The technical solutions of the embodiments of the present application can be implemented as follows:

in a first aspect, an embodiment of the present application provides a configuration method, which is applied to a network side device, and the method includes:
configuring, in a measurement timing configuration based on a synchronization signal block (SMTC) period, at least two SMTC measurement windows to obtain SMTC configuration information; and
sending the SMTC configuration information to a terminal.

In a second aspect, an embodiment of the present application provides a configuration method, which is applied to a terminal, and the method includes:

receiving SMTC configuration information; where the SMTC configuration information includes configuration information obtained by configuring at least two SMTC measurement windows; and
detecting a synchronization signal block of the SMTC measurement window corresponding to a cell to be measured according to the SMTC configuration information to realize a measurement of the cell to be measured.

In a third aspect, an embodiment of the present application provides a network side device which includes:

a configuration part, configured to configure, in a measurement timing configuration based on a synchronization signal block (SMTC) period, at least two SMTC measurement windows to obtain SMTC configuration information; and
a sending part, configured to send the SMTC configuration information to a terminal.

In a fourth aspect, an embodiment of the present application provides a terminal which includes:

a receiving part, configured to receive SMTC configuration information; where the SMTC configuration information includes configuration information obtained by configuring at least two SMTC measurement windows; and
a detection part, configured to detect a synchronization signal block of the SMTC measurement window corresponding to a cell to be measured according to the SMTC configuration information to realize a measurement of the cell to be measured.

In a fifth aspect, an embodiment of the present application further provides a network side device which includes:

a first network interface, configured to receive and send a signal and information in a process of sending and receiving information with a terminal;
a first memory, configured to store executable configuration instructions; and
a first processor, configured to implement the method according to the network side device when executing the executable configuration instructions stored in the first memory.

In a sixth aspect, an embodiment of the present application further provides a terminal which includes:

a second network interface, configured to receive and send a signal and information in a process of sending and receiving information with the terminal;
a second memory, configured to store executable configuration instructions; and
a second processor, configured to implement the method according to the terminal side when executing the executable configuration instructions stored in the second memory.

In a seventh aspect, an embodiment of the present application provides a computer readable storage medium, which is used to cause the first processor to execute to implement the method according to the network side device.
In an eighth aspect, an embodiment of the present application provides a computer readable storage medium, which is used to cause the first processor to execute to implement the method according to the terminal side.
The embodiments of the present application provide a configuration method, a communication device, and a computer readable storage medium. By configuring at least two SMTC measurement windows in an SMTC period, SMTC configuration information is obtained; and the SMTC configuration information is sent to a terminal. By using the above technical implementation solution, when the network side device performs the synchronization signal block transmission configuration, it uses multiple SMTC measurement windows in an SMTC period to perform the synchronization signal block transmission. Therefore, when the network side device sends SSBs of different cells, multiple SMTC measurement windows can be used to send the SSBs of the different cells in the same time period, which improves the transmission efficiency of the SSB and improves the timeliness and success rate of performing neighbor cell measurement based on the SSB by the terminal, that is, the efficiency and the success rate of the measurement are improved.

□ **BRIEF DESCRIPTION OF DRAWINGS**

FIG. 1 is an architecture diagram of a communication system provided by an embodiment of the present application;
FIG. 2 is a schematic structural diagram of an SSB provided by an embodiment of the present application;
FIG. 3 is a flowchart of a configuration method provided by an embodiment of the present application;
FIG. 4 is a schematic diagram 1 of a configuration position of an STMC measurement window provided by an embodiment of the present application;
FIG. 5 is a schematic diagram 2 of a configuration position of an STMC measurement window provided by an embodiment of the present application;
FIG. 6 is a schematic diagram 3 of a configuration position of an STMC measurement window provided by an embodiment of the present application;
FIG. 7 is a schematic diagram 4 of a configuration position of an STMC measurement window provided by an embodiment of the present application;
FIG. 8 is a schematic diagram 5 of a configuration position of an STMC measurement window provided by an embodiment of the present application;
FIG. 9 is a flowchart of a configuration method further provided by an embodiment of the present application;
FIG. 10 is an interaction diagram of a configuration method provided by an embodiment of the present application;
FIG. 11 is a structural diagram 1 of a network side device provided by an embodiment of the present application;
FIG. 12 is a structural diagram 2 of a network side device provided by an embodiment of the present application;
FIG. 13 is a structural diagram 1 of a terminal provided by an embodiment of the present application; and
FIG. 14 is a structural diagram 2 of a terminal provided by an embodiment of the present application.

## DESCRIPTION OF EMBODIMENTS

In order to have a more detailed understanding of the features and technical content of the embodiments of the present application, the implementation of the embodiments of the present application will be described in detail below in conjunction with the accompanying drawings. The attached drawings are only for reference and description, and are not used to limit the embodiments of the present application.

The technical solutions of the embodiments of the present application can be applied to various communication systems, for example: a global mobile communication (Global System of Mobile Communication, GSM) system, a code division multiple access system (Code Division Multiple Access, CDMA), a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD), an universal mobile telecommunication system (Universal Mobile Telecommunication System, UMTS), a worldwide interoperability for microwave access (Worldwide Interoperability for Microwave Access, WiMAX) communication system or a 5G system, etc.

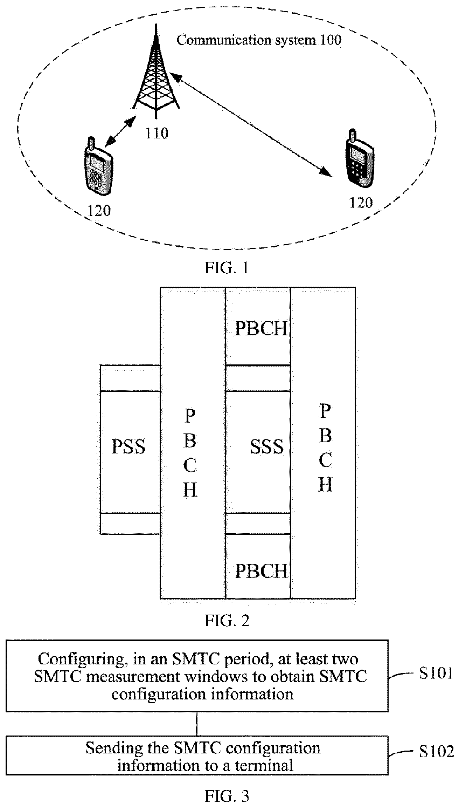

Exemplarily, the communication system 100 applied in the embodiment of the present application is shown in FIG. 1. The communication system 100 may include communication device. The communication device includes: a network side device 110 and a terminal device 120. The network side device 110 may be a device that communicates with a terminal device 120 (or called a communication terminal or a terminal), may provide communication coverage for a specific geographic area, and may communicate with a terminal device located in the coverage area. Optionally, the network side device 110 may be a base station (Base Transceiver Station, BTS) in a GSM system or a CDMA system, may also be a base station (NodeB, NB) in a WCDMA system, or may further be an evolved base station (Evolutional Node B, eNB or eNodeB) in an LTE system, or is a wireless controller in the cloud radio access network (Cloud Radio Access Network, CRAN). Or the network device can be a mobile switching center, a relay station, an access point, a vehicle-mounted device, a wearable device, a hub, a switch, a bridge, a router, a network side device in a 5G network, or a network device in a further evolution public land mobile network (Public Land Mobile Mobile Network, PLMN), etc.

The communication system 100 further includes at least a terminal device 120 located within the coverage area of the network side device 110. The "terminal equipment" as used herein includes, but is not limited to, being connected via a wired line, such as via a public switched telephone network (Public Switched Telephone Networks, PSTN), a digital subscriber line (Digital Subscriber Line, DSL), a digital cable, and a direct cable connection; and/or another data connection/network; and/or via a wireless interface, such as for a cellular network, a wireless local area network (Wireless Local Area Network, WLAN), a digital TV network such as a DVB-H network, a satellite network, a AM-FM broadcast transmitter; and/or an apparatus of another terminal device that is set to receive/send a communication signal; and/or an Internet of Things (Internet of Things, IoT) device. A terminal device set to communicate through a wireless interface may be referred to as a "wireless communication terminal", a "wireless terminal" or a "mobile terminal". An example of the mobile terminal includes, but is not limited to, a satellite or a cellular phone; a personal communication system (Personal Communications System, PCS) terminal that can combine cellular radio phones with data processing, fax, and data communication capabilities; a PDA may include a radio telephone, a pager, an Internet/Intranet access, a Web browser, a notepad, a calendar, and/or a global positioning system (Global Positioning System, GPS) receiver; and a conventional laptop and/or palmtop receiver or other electronic apparatuses including a radio telephone transceiver. Terminal device can refer to a access terminal, an user equipment (User Equipment, UE), an user unit, an user station, a mobile station, a mobile table, a remote station, a remote terminal, a mobile device, an user terminal, a terminal, a wireless communication device, an user agent, or a user apparatus. The access terminal can be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device with a wireless communication function, a computing device or other processing devices connected to wireless modems, an in-vehicle device, a wearable device, a terminal device in 5G networks or a terminal device in the future evolution PLMN, etc.

Optionally, the 5G system or 5G network may also be referred to as a new radio (New Radio, NR) system or a NR network.

FIG. 1 exemplarily shows, a network side device and two terminal devices (that is, two terminals), optionally, the communication system 100 may include multiple network side devices and other network devices, and the coverage of each network device may include other numbers of terminal devices, which is not limited in the embodiment of the present application.

Optionally, the communication system 100 may further include other network entities such as a network controller and a mobility management entity, which are not limited in the embodiment of the present application.

It should be understood that the terms "system" and "network" in the present application are often used interchangeably in the present application. The term "and/or" in the present application is only an association relationship describing associated objects, indicating that there can be three types of relationships, for example, A and/or B can mean: there are three cases of A alone, A and B at the same time, and B alone. In addition, the character "/" in the present application generally indicates that the associated objects before and after are in an "or" relationship.

The following describes various embodiments implementing the present application based on the architecture of FIG. 1.

In this embodiment of the present application, the network side device provides services for the cell, and the terminal device communicates with the network side device through the transmission resources (for example, frequency domain resources, or spectrum resources) used by the cell. The cell can be a cell corresponding to the network side device (such as, a base station). The cell can belong to a macro base station or a base station corresponding to a small cell. The small cell here can include: a metro cell (Metro cell), a micro cell (Micro cell), a pico cell (Pico cell), a femto cell (Femto cell), etc. These small cells have characteristics of small coverage and low transmit power, and are suitable for providing high-rate data transmission services.

In the embodiment of the present application, a UE, that is, the terminal and the network side device implement communication in a manner of a transmission of a common signal (for example, a synchronization signal (SS, synchronization signal)). When the signal transmission is realized by using the NR system on an unlicensed spectrum, the user device can achieve the obtaining of the system information in the system message by receiving the synchronization signal block sent by the network side device, and then perform a network access.

Specifically, in a 5G NR system, a synchronization signal and a broadcast channel need to cover the entire cell by means of multi-beam scanning to facilitate the reception by a UE in the cell. The synchronization signal (SS, synchronization signal) is achieved by defining the synchronization signal burst set SS burst set when the multi-beam is sent. An SS burst set contains one or more synchronization signal blocks (SSB, synchronization signal block). An SSB is used to carry a synchronization signal and a broadcast channel of a beam. An SSB contains a primary synchronization signal (PSS, Primary Synchronization Signal), a secondary synchronization signal (SSS, Secondary Synchronization Signal) and a physical broadcast channel (NR-PBCH, New Radio Access Technology-Physical broadcast channel). Refer to FIG. 2 for the specific schematic structural diagram of the SS block. In addition to the synchronization signal and the PBCH, which require multi-beam scanning, other public information, such as remaining minimum system information (RMSI, Remaining Minimum System Information) and a paging message also need to be sent through multi-beam scanning.

Here, the synchronization signal block can be configured by the network side device to the UE; and the SSB is used for radio resource management RRM and mobility measurement.

The embodiment of the present application proposes some implementations for the SMTC configuration in a scenario where the SMTC measurement window is used to send the SSB of each cell when the network side device configures the synchronization signal block to the UE.

Based on the above description content, the following embodiments are proposed.

Embodiment 1

The embodiment of the present application provides a configuration method, as shown in FIG. 3, applied to a network side device, the method includes:

S101. Configuring, in an SMTC period, at least two SMTC measurement windows to obtain SMTC configuration information.
S102. Sending the SMTC configuration information to a terminal.

In the embodiment of the present application, the network side device uses a concept of SMTC to send the SSB, which is convenient for the terminal (for example, the UE) to perform a measurement based on the SSB. When the network side device configures the SMTC, since it is configured periodically, that is, the SMTC is periodically set for an unlicensed frequency band. In an SMTC period, the network side device will also configure or set multiple SMTC measurement windows, and use multiple SMTC measurement windows to perform the sending opportunity the SSB of different cells served by the network side device.

Therefore, the network side device will configure at least two SMTC measurement windows in each SMTC cycle to obtain SMTC configuration information, and then send the SMTC configuration information to the terminal, so that the network side device sends the SSB of its serving cell according to the SMTC configuration information. Then, since the terminal has learned the configuration of the SMTC measurement window, it can monitor the messages on the SMTC measurement window in a targeted manner to receive the SSB, and then perform measurement based on the SSB.

It should be noted that, in the embodiment of the present invention, the configuration information of each SMTC measurement window can be independently configured by the network side device.

In the embodiment of the present application, whenever a measurement needs to be performed, the network side device needs to configure the SMTC measurement window when configuring a measurement object, for example, when measuring frequency point information.

In some embodiments of the present application, the SMTC configuration information includes: SMTC period information and SMTC measurement window related information.

Where, the SMTC period information refers to the time length of a SMTC period. The SMTC measurement window related information refers to some data and information related to setting the SMTC measurement window.

In the embodiment of the present application, the time length of the SMTC period information is not limited in the embodiment of the present invention, which may be various optional values such as 10 ms, 20 ms, 40 ms, and 160 ms.

In the embodiment of the present application, a slot is used as a minimum time unit, so how many slots in an SMTC period is related to the subcarrier interval, and the subcarrier interval determines how many subframes or how many ms that a slot corresponds to, so as to know how many slots in a SMTC period.

Exemplarily, the time length of 1 subframe is 1ms. When the subcarrier interval $\Delta f$ is 15, 1ms is a slot; when the subcarrier interval $\Delta f$ is 30, 1ms is 2 slots; and when the subcarrier interval $\Delta f$ is 60, 1ms is 4 slots.

In some embodiments of the present application, the SMTC measurement window related information includes: the starting position of the SMTC measurement window and the window size information of the SMTC measurement window.

In the embodiment of the present application, the SMTC measurement window is a time window, so the window length or size of each SMTC measurement window can be expressed by time. Where, the starting position of the SMTC measurement window characterizes the starting time point of an SMTC measurement window, which is represented by slot. For example, in which slot an SMTC measurement window is started, or which slot is the starting position of the SMTC measurement window, etc.

Where, the starting position of the SMTC measurement window includes: the starting position of each SMTC measurement window in at least two SMTC measurement windows.

Alternatively, the starting position of the SMTC measurement window includes: the starting position of the first SMTC measurement window of the at least two SMTC measurement windows.

In some embodiments of the present application, when the starting position of the SMTC measurement window includes the starting position of each SMTC measurement window in at least two SMTC measurement windows, the window size information of the SMTC measurement window includes: at least two SMTC measurement windows have SMTC measurement windows with different window sizes.

In some embodiments of the present application, when the starting position of the SMTC measurement window includes the starting position of the first SMTC measurement window of the at least two SMTC measurement windows, the SMTC measurement window related information further includes: the number of the SMTC measurement windows.

In some embodiments of the present application, the window size information of the SMTC measurement window includes: the window size of each SMTC measurement window of the at least two SMTC measurement windows is a preset length.

That is to say, the window length of each SMTC measurement window can be the same, which is a preset length, and the preset length is a time length, which is not limited in the embodiment of the present invention, but the preset length must be less than half of the length of the SMTC period information. For example, the preset length is 2ms.

In some embodiments of the present application, the SMTC measurement window related information further includes: the time interval between two adjacent SMTC measurement windows.

It should be noted that after configuring the starting position of the first SMTC measurement window, the network side device can then configure the time interval of every two adjacent SMTC measurement windows to know where to start the setting or the configuration of the next SMTC measurement window.

In the embodiment of the present application, the size of the time interval between two adjacent SMTC measurement windows can be set by themselves, but the time interval between two adjacent SMTC measurement windows cannot exceed the SMTC period information.

In some embodiments of the present application, the SMTC configuration information further includes: cell information to be measured.

Where, the cell to be measured is a cell that the terminal needs to measure. When the network side device performs SMTC configuration, it can be specific to which cells can be sent in which SMTC measurement windows. The information of the cell to be measured is the information of the cell that can send the SSB in the SMTC measurement window.

In some embodiments of the present application, the information of the cell to be measured may also be information of the measurement cell shared by at least two SMTC measurement windows.

That is to say, the cell information to be measured may be the same cell information to be measured corresponding to each SMTC measurement window.

In some embodiments of the present application, the information of the cell to be measured includes: information of the sub-cell to be measured corresponding to each of the at least two SMTC measurement windows.

That is to say, the information of the cell to be measured may be information of a sub-cell to be measured corresponding to each SMTC measurement window one-to-one.

It should be noted that at least two SMTC measurement windows may have a cell to be measured with overlapping configurations, which can increase more options for sending the SSB of the cell to be measured and improve the efficiency of SSB transmission.

Based on the different possible choices of above configuration information, in the embodiment of the present application, different kinds of configuration information can be combined. Exemplarily, the combination of SMTC configuration information is as follows:

(1) the SMTC period information, the starting position of each SMTC measurement window in at least two SMTC measurement windows, and the SMTC measurement windows with inconsistent window sizes in at least two SMTC measurement windows.

(2) The SMTC period information, the starting position of each SMTC measurement window in at least two SMTC measurement windows, and the window size of each SMTC measurement window in at least two SMTC measurement windows is a preset length.

(3) The SMTC period information, the number of SMTC measurement windows, the starting position of the first SMTC measurement window in at least two SMTC measurement windows, and the window size of each SMTC measurement window in at least two SMTC measurement windows is a preset length.

(4) The SMTC period information, the starting position of the first SMTC measurement window in at least two SMTC measurement windows, the time interval between two adjacent SMTC measurement windows, and the window size of each SMTC measurement window in at least two SMTC measurement windows is a preset length.

(5) The SMTC period information, the starting position of the first SMTC measurement window in at least two SMTC measurement windows, the time interval between two adjacent SMTC measurement windows, the number of the windows of the SMTC measurement windows and the window size of each SMTC measurement window in at least two SMTC measurement windows is a preset length.

Based on the different possible choices of the above configuration information, the network side device can determine the starting position of each SMTC measurement window according to the combination of the starting position of the first SMTC measurement window and other configuration information, and then realize the configuration of the SMTC measurement window, which is as follows:

for (3), the network side device determines the starting position of each SMTC measurement window in at least two SMTC measurement windows according to the SMTC period information, the number of windows, and the starting position of the first SMTC measurement window.

For (4), the network side device determines the starting position of each SMTC measurement window in at least two SMTC measurement windows according to the SMTC period information, the time interval between two adjacent SMTC measurement windows, and the starting position of the first SMTC measurement window.

For (5), the network side device determines the starting position of each SMTC measurement window at least two SMTC measurement windows according to the SMTC period information, the number of windows, the time interval between two adjacent SMTC measurement windows, and the starting position of the first SMTC measurement window.

Exemplarily, SCS is $\Delta f$.

For (1), the SMTC configuration information includes:

SMTC period T, (a total of $N_T$ slots in period T);
the starting position $t_k$ of each SMTC measurement window k in the SMTC period; and
the window size of each SMTC measurement window k in the SMTC period is any $W_k$ (different window sizes, there are $N_k$ slots in the window $W_k$).

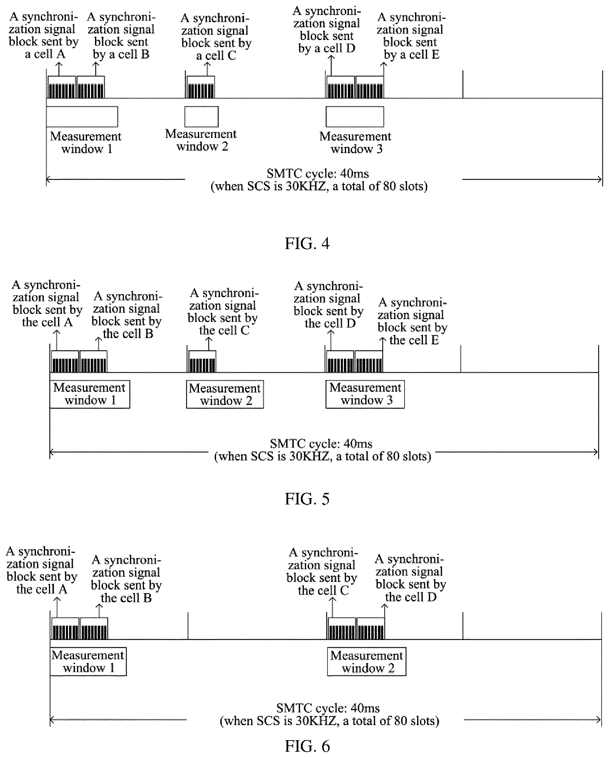

As shown in FIG. 4, when $\Delta f$ is 30kHZ, there are 2 slots in 1ms, and when T=40ms, there are 80 slots in a SMTS cycle. The base station (network side device) configures the starting position of the first SMTC measurement window in the SMTC period as the first slot in 40ms, and configures the length of the first SMTC measurement window as 5ms; configures the starting position of the second SMTC measurement window in the SMTC period as the 21st slot in 40ms, and configures the length of the second SMTC measurement window as 2ms; and configures the starting position of the third SMTC measurement window in the SMTC period as the 41st slot in 40ms, and configures the length of the third SMTC measurement window as 4ms. The base station sends the above configuration information to a UE. The UE learns the position of each SMTC measurement window in the SMTC period based on the above configuration information, and finds and measures a cell in each SMTC measurement window. Where, the information of the cell to be measured corresponding to the first SMTC measurement window (measurement window 1) includes: a cell A and a cell B; the information of the cell to be measured corresponding to the second SMTC measurement window (measurement window 2) includes: a cell C; and the cell information to be measured corresponding to the third SMTC measurement window (measurement window 3) includes: a cell D and a cell E.

For (2), the SMTC configuration information includes:

SMTC period T, (a total of $N_T$ slots in period T);
The starting position $t_k$ of each SMTC measurement window k in the SMTC period; and
the window size of each SMTC measurement window k in the SMTC period is W.

As shown in FIG. 5, when Δf is 30kHZ, there are 2 slots in 1ms, and when T=40ms, there are 80 slots in a SMTS cycle. The base station configures the starting position of the second SMTC measurement window in the SMTC period as the 21st slot in 40ms; configures the starting position of the third SMTC measurement window in the SMTC period as the 41st slot in 40ms; and configures the window length of each SMTC measurement window is 5ms. The base station sends the above SMTC configuration information to a UE, and the UE learns the position of each SMTC measurement window in the SMTC period based on the above configuration information, and finds and measures a cell in each SMTC measurement window. Where, the information of the cell to be measured corresponding to the first SMTC measurement window (measurement window 1) includes: the cell A and the cell B; the information of the cell to be measured corresponding to the second SMTC measurement window (measurement window 2) includes: the cell C; and the information of the cell to be measured corresponding to the third SMTC measurement windows (measurement window 3) includes: the cell D and the cell E.

For (3), the SMTC configuration information includes:

SMTC period T (there are $N_T$ slots in period T);
the number K of SMTC measurement windows configured in the SMTC period;
the starting position ti of the first SMTC measurement window in the SMTC period; and
the window size W shared by each SMTC measurement window in the SMTC period (there are Nw slots in W).

It should be noted that, based on the above configuration, the base station can determine the starting position of the k-th measurement window in the SMTC measurement window as formula (1) which is as follows:

$$t_k = t_1 + (k - 1) * \text{floor}(N_T / K) \tag{1}$$

As shown in FIG. 6, when Δf is 30kHZ, there are 2 slots in 1ms, and when T=40ms, there are 80 slots in a SMTS cycle. The number of SMTC measurement windows configured in the period that the base station configures SMTC is K=2, and the starting position of the first SMTC measurement window in the SMTC period is configured to be $t_1$=1 slot in 80 slots. It is calculated that the starting position of the second SMTC measurement window in the SMTC period is $t_k$=1+(2-1)∗floor(80/2)=41 (41st) slot in 80 slots, and the window length of each SMTC measurement window mentioned above is configured as 5ms. The base station sends the above SMTC configuration information to the UE. The UE learns the position of each SMTC measurement window in the SMTC period through corresponding calculations based on the above SMTC configuration information, and finds and measures the cells in each SMTC measurement window. Where, the information of the cell to be measured corresponding to the first SMTC measurement window (measurement window 1) includes: the cell A and the cell B; the information of the cell to be measured corresponding to the second SMTC measurement window (measurement window 2) includes: the cell C and the cell D.

For (4), the SMTC configuration information includes:

SMTC period T (there are $N_T$ slots in period T);
the starting position ti of the first SMTC measurement window in the SMTC period;
the time interval tΔ between two adjacent SMTC measurement windows in the SMTC period; and
the window size W shared by each SMTC measurement window in the SMTC period (there are Nw slots in W).

It should be noted that, based on the above configuration, the base station can determine the starting position of the k-th measurement window in the SMTC measurement window as formula (2) which is as follows:

$$t_k = t_1 + (k - 1) * t_\Delta \tag{2}$$

Where, there are a total of K SMTC measurement windows in the SMTC measurement window, and K=floor$(N_T/T_\Delta)$.

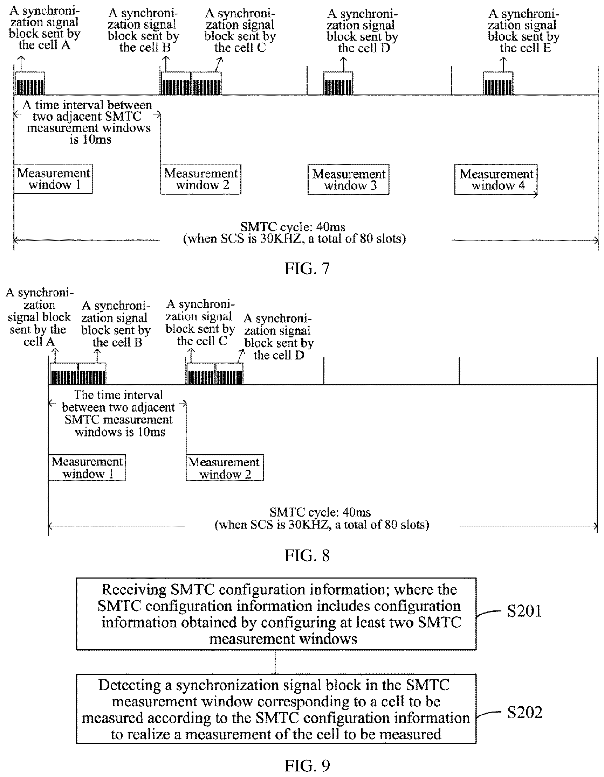

As shown in FIG. 7, when Δf is 30kHZ, there are 2 slots in 1ms, and when T=40ms, there are 80 slots in a SMTS cycle. The base station configures the starting position of the first SMTC measurement window in the SMTC period to be $t_1=1$ (the first) slot in the above 80 slots, and configures the time interval $t_\Delta$ between two adjacent SMTC measurement windows in the SMTC period to be 20 slots. It is calculated that the starting position of the second SMTC measurement window in the SMTC period is the $t_k=1+(2-1)*20=21$ (21st) slot in the above 80 slots. It is calculated that the starting position of the third SMTC measurement window in the SMTC period is the 41st in the above 80 slots. It is calculated that the starting position of the fourth SMTC measurement window in the SMTC period is the 61st in the above 80 slots. The window length of each SMTC measurement window is configured to be 5ms (that is, 10 slots). It is calculated that there are 4 SMTC measurement windows in the SMTC measurement window. The base station sends the above SMTC configuration information to a UE, and the UE learns the position of each SMTC measurement window in the SMTC period through corresponding calculations based on the above SMTC configuration information, and finds and measures the cells in each SMTC measurement window. Where, the information of the cell to be measured corresponding to the first SMTC measurement window (measurement window 1) includes: the cell A; the information of the cell to be measured corresponding to the second SMTC measurement window (measurement window 2) includes: the cell C and the cell B; the information of the cell to be measured corresponding to the third SMTC measurement window (measurement window 3) includes: the cell D; and the information of the cell to be measured corresponding to the fourth SMTC measurement window (measurement window 4) includes: the cell E.

For (5), the SMTC configuration information includes:

SMTC period T (there are $N_T$ slots in period T);

the starting position ti of the first SMTC measurement window in the SMTC period;
the time interval $t_\Delta$ between two adjacent SMTC measurement windows in the SMTC period;
the number of measurement windows K configured in the SMTC period; and
the window size W shared by each SMTC measurement window in the SMTC period (there are Nw slots in W).

It should be noted that, based on the above configuration, the base station can determine the starting position of the k-th measurement window in the SMTC measurement window as formula (3) which is as follows:

$$ t_k = t_1 + (k - 1) * t_\Delta, \qquad k \leq K \tag{3} $$

As shown in FIG. 8, when Δf is 30kHZ, there are 2 slots in 1ms, and when T=40ms, there are 80 slots in a SMTS cycle. The number of SMTC measurement windows configured in the period that the base station configures SMTC is K=2, the starting position of the first SMTC measurement window in the SMTC period is configured to be the $t_1=1$ (the first) slot in the above 80 slots, and the time interval $t_\Delta$ between two adjacent SMTC measurement windows in the SMTC period is configured to be 20 slots. It is calculated that the starting position of the second SMTC measurement window in the SMTC period is $t_k=1+(2-1)*20=21$ (21st) slot, and the window length of each SMTC measurement window mentioned above is configured to be 5ms. The base station sends the above SMTC configuration information to the UE, and the UE learns the position of each SMTC measurement window in the SMTC period through corresponding calculations based on the above SMTC configuration information, and finds and measures the cells in each SMTC measurement window. Where, the information of the cell to be measured corresponding to the first SMTC measurement window (measurement window 1) includes: the cell A and the cell B; and the information of the cell to be measured corresponding to the second SMTC measurement window (measurement window 2) includes: the cell C and the cell D.

Further, after determining the starting position of each SMTC measurement window of the at least two SMTC measurement windows, the network side device may also send the starting position of each SMTC measurement window as SMTC configuration information to the terminal. In this way, the terminal can directly know which cell SSB can be detected and received at which time and where.

It is understandable that when the network side device performs the synchronization signal block transmission configuration, it uses multiple SMTC measurement windows in an SMTC period to perform the synchronization signal block transmission. Therefore, when the network side device sends SSBs of different cells, multiple SMTC measurement windows can be used to send the SSBs of the different cells in the same time period, which improves the transmission efficiency of the SSB and improves the timeliness and success rate of performing neighbor cell measurement based on SSB by the terminal, that is, the efficiency and the success rate of the measurement are improved.

Embodiment 2

The embodiment of the present application provides a configuration method, as shown in FIG. 9, applied to a terminal, where the method includes:

S201. receiving SMTC configuration information; where the SMTC configuration information includes configuration information obtained by configuring at least two SMTC measurement windows; and

S202: detecting a synchronization signal block in the SMTC measurement window corresponding to a cell to be measured according to the SMTC configuration information to realize a measurement of the cell to be measured.

In the embodiment of the present application, the network side device uses the concept of SMTC to send the SSB, which is convenient for the terminal (for example, the UE) to perform a measurement based on the SSB. When the network side device configures the SMTC, since it is configured periodically, that is, the SMTC is periodically set for an unlicensed frequency band. In an SMTC period, the network side device will also configure or set multiple SMTC measurement windows, and use multiple SMTC measurement windows to perform the send opportunity the SSB of different cells served by the network side device.

Therefore, the network side device will configure at least two SMTC measurement windows in each SMTC cycle to obtain SMTC configuration information, and then send the SMTC configuration information to the terminal, that is, the terminal receives the SMTC configuration information. In this way, the network side device sends the SSB of its serving cell according to the SMTC configuration information. Then, since the terminal has learned the configuration of the SMTC measurement window, the terminal can monitor the messages on the SMTC measurement window in a targeted manner to receive the SSB, and then perform a measurement based on the SSB. That is, the terminal can configure information according to the SMTC, detect the synchronization signal block in the SMTC measurement window corresponding to the cell to be measured, and realize the measurement of the cell to be measured.

In some embodiments of the present application, the SMTC configuration information includes: SMTC period information and SMTC measurement window related information.

In some embodiments of the present application, the SMTC measurement window related information includes: the starting position of the SMTC measurement window and the window size information of the SMTC measurement window.

In some embodiments of the present application, the starting position of the SMTC measurement window includes: the starting position of each SMTC measurement window in at least two SMTC measurement windows.

In some embodiments of the present application, the starting position of the SMTC measurement window includes: the starting position of the first SMTC measurement window of the at least two SMTC measurement windows.

In some embodiments of the present application, the window size information of the SMTC measurement window includes: there are SMTC measurement windows with different window sizes among at least two SMTC measurement windows.

In some embodiments of the present application, the SMTC measurement window related information further includes: number of SMTC measurement windows.

In some embodiments of the present application, the window size information of the SMTC measurement window includes: the window size of each SMTC measurement window of the at least two SMTC measurement windows is a preset length.

In some embodiments of the present application, the SMTC measurement window related information further includes: a time interval between two adjacent SMTC measurement windows.

In some embodiments of the present application, the SMTC configuration information further includes: information of a cell to be measured.

In some embodiments of the present application, the information of a cell to be measured is the information of a measurement cell shared by the at least two SMTC measurement windows.

In some embodiments of the present application, the information of the cell to be measured includes: information of a sub-cell to be measured corresponding to each SMTC measurement window of the at least two SMTC measurement windows.

It should be noted that, in some embodiments of the present application, in addition to receiving the starting position of each SMTC measurement window from the network side device, the terminal does not have starting position of each SMTC measurement window in the SMTC configuration information of the network side device. And only in the configuration information combination of the starting position of the first measurement window, the terminal can calculate the starting position of each SMTC measurement window by itself.

In some embodiments of the present application, the terminal determines the starting position of each SMTC measurement window of the at least two SMTC measurement windows according to the SMTC period information, the number of windows, and the starting position of the first SMTC measurement window.

In some embodiments of the present application, the terminal determines the starting position of each SMTC measurement window of the at least two SMTC measurement windows according to the SMTC period information, the time interval between two adjacent SMTC measurement windows, and the starting position of the first SMTC measurement window.

In some embodiments of the present application, the terminal determines the starting position of each SMTC measurement window of the at least two SMTC measurement windows according to the SMTC period information, the time interval between two adjacent SMTC measurement windows, the starting position of the first SMTC measurement window and the number of the windows.

In the embodiment of the present application, the STMC configuration information obtained by the terminal and the starting position of each SMTC measurement window are the same as the content and principles described in the embodiment of the network side device, which will not be repeated here.

It is understandable that when the network side device performs the synchronization signal block transmission configuration, it uses multiple SMTC measurement windows in an SMTC period to perform the synchronization signal block transmission. Therefore, when the network side device sends SSBs of different cells, multiple SMTC measurement windows can be used to send them in the same time period, which improves the transmission efficiency of the SSB. Then, the timeliness and success rate that the terminal can perform neighbor cell measurement based on the SSB are provided, that is, the efficiency and success rate of the measurement are improved.

Embodiment 3

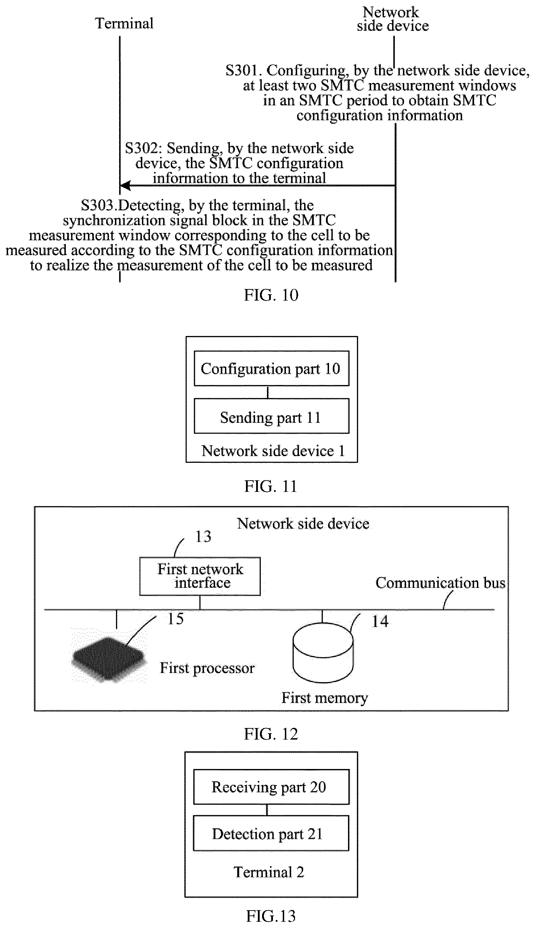

Based on the inventive concepts of Embodiment 1 and Embodiment 2, an embodiment of the present application provides a configuration method. As shown in FIG. 10, the method includes:

S301. Configuring, by the network side device, at least two SMTC measurement windows in an SMTC period to obtain SMTC configuration information.

S302: Sending, by the network side device, the SMTC configuration information to the terminal.

S303. Detecting, by the terminal, the synchronization signal block in the SMTC measurement window corresponding to the cell to be measured according to the SMTC configuration information to realize the measurement of the cell to be measured.

In the embodiment of the present application, the detailed implementation of S301-S303 has been described in Embodiment 1 and Embodiment 2, which will not be repeated here.

It is understandable that when the network side device performs the synchronization signal block transmission configuration, it uses multiple SMTC measurement windows in an SMTC period to perform the synchronization signal block transmission. Therefore, when the network side device sends SSBs of different cells, multiple SMTC measurement windows can be used to send the SSBs of the different cells in the same time period, which improves the transmission efficiency of the SSB and improves the timeliness and success rate of performing neighbor cell measurement based on the SSB by the terminal, that is, the efficiency and the success rate of the measurement are improved.

Embodiment 4

Based on the inventive concepts of the foregoing Embodiment 1 and Embodiment 3, as shown in FIG. 11, an embodiment of the present application provides a network side device 1 corresponding to a data transmission method of the network side device. The network side device 1 may include:

a configuration part 10, configured to configure at least two SMTC measurement windows in a measurement timing configuration SMTC period based on the synchronization signal block to obtain SMTC configuration information; and
a sending part 11, configured to send the SMTC configuration information to the terminal.

In some embodiments of the present application, the SMTC configuration information includes: SMTC period information and SMTC measurement window related information.

In some embodiments of the present application, the SMTC measurement window related information includes: a starting position of the SMTC measurement window and window size information of the SMTC measurement window.

In some embodiments of the present application, the starting position of the SMTC measurement window includes: the starting position of each SMTC measurement window of the at least two SMTC measurement windows.

In some embodiments of the present application, the starting position of the SMTC measurement window includes: the starting position of a first SMTC measurement window of the at least two SMTC measurement windows.

In some embodiments of the present application, the window size information of the SMTC measurement window includes: there are SMTC measurement windows with different window sizes among the at least two SMTC measurement windows.

In some embodiments of the present application, the SMTC measurement window related information further includes: number of SMTC measurement windows.

In some embodiments of the present application, the window size information of the SMTC measurement window includes: the window size of each SMTC measurement window of the at least two SMTC measurement windows is a preset length.

In some embodiments of the present application, the SMTC measurement window related information further includes: a time interval between two adjacent SMTC measurement windows.

In some embodiments of the present application, the SMTC configuration information further includes: information of a cell to be measured.

In some embodiments of the present application, the information of the cell to be measured is information of a measurement cell shared by the at least two SMTC measurement windows.

In some embodiments of the present application, the information of the cell to be measured includes: information of a sub-cell to be measured corresponding to each SMTC measurement window of the at least two SMTC measurement windows.

In some embodiments of the present application, the network side device 1 further includes: a first determining part 12;

where the first determining part 12 is configured to determine the starting position of each SMTC measurement window of the at least two SMTC measurement windows according to the SMTC period information, the number of the windows, and the starting position of the first SMTC measurement window.

In some embodiments of the present application, the network side device 1 further includes: a first determining part 12;

where, the first determining part 12 is configured to determine the starting position of each SMTC measurement window of the at least two SMTC measurement windows according to the SMTC period information, the time interval between the two adjacent SMTC measurement windows, and the starting position of the first SMTC measurement window.

In some embodiments of the present application, the network side device 1 further includes: a first determining part 12;

where, the first determining part 12 is configured to determine the starting position of each SMTC measurement window of the at least two SMTC measurement windows according to the SMTC period information, the time interval between the two adjacent SMTC measurement windows, the starting position of the first SMTC measurement window and the number of the windows.

In some embodiments of the present application, the sending part 11 is further configured to send the starting position of each SMTC measurement window as the SMTC configuration information to the terminal after determining the starting position of each SMTC measurement window of the at least two SMTC measurement windows.

It can be understood that, in the embodiments of the present application, "part" can be a part of a circuit, a part of a processor, a part of a program or software, etc., of course, it may also be a unit, a module, or a non-modular one, which is not limited by the embodiment of the present application.

As shown in FIG. 12, an embodiment of the present application further provides a network side device which includes:

a first network interface 13, configured to receive and send a signal and information in a process of sending and receiving information with a terminal;
a first memory 14, configured to store executable configuration instructions; and
a first processor 15, configured to implement the configuration method executed by the network side device when executing the executable configuration instructions stored in the first memory 14.

Where, the first processor can be a central processing unit (CPU, Central Processing Unit), a microprocessor (MPU, Microprocessor Unit), a digital signal processor (DSP, Digital Signal Processor), or a field programmable gate array (FPGA, Field Programmable Gate Array), etc., which are not limited by the embodiments of the present application.

It should be noted that, in actual applications, various components in the core network device are coupled together through a communication bus. It can be understood that the communication bus is used to realize the connection and communication between these components. In addition to a data bus, the communication bus further includes a power bus, a control bus, and a status signal bus. However, for the sake of clarity, various buses may be referred to as communication buses.

An embodiment of the present application provides a computer readable storage medium storing executable configuration instructions for causing the first processor to execute to implement the configuration method executed on the network side device side.

The aforementioned storage medium includes: a ferromagnetic random access memory (Ferromagnetic Random Access Memory, FRAM), a read only memory (Read Only Memory, ROM), a programmable read only memory (Programmable Read-Only Memory, PROM), an erasable programmable read only memory (Erasable Programmable Read-Only Memory, EPROM), an electrically erasable programmable read-only memory (Electrically Erasable Programmable Read-Only Memory, EEPROM), a flash memory (Flash Memory), a magnetic surface memory, an optical disk, or a compact disc read-only memory (Compact Disc Read-Only Memory, CD-ROM) and other media that can store program codes, which are not limited in the embodiment of the present application.

It can be understandable that when the network side device performs the synchronization signal block transmission configuration, it uses multiple SMTC measurement windows in an SMTC period to perform the synchronization signal block transmission. Therefore, when the network side device sends SSBs of different cells, multiple SMTC measurement windows can be used to send the SSBs of the different cells in the same time period, which improves the transmission efficiency of the SSB and improves the timeliness and success rate of performing neighbor cell measurement based on the SSB by the terminal, that is, the efficiency and the success rate of the measurement are improved.

Embodiment 5

Based on the inventive concepts of the foregoing Embodiment 2 and Embodiment 3, as shown in FIG. 13, an embodiment of the present application provides a terminal 2 corresponding to the configuration method on the terminal side. The terminal 2 may include:

a receiving part 20, configured to receive SMTC configuration information; where the SMTC configuration information includes configuration information obtained by configuring at least two SMTC measurement windows; and

a detection part 21, configured to detect a synchronization signal block of the SMTC measurement window corresponding to a cell to be measured according to the SMTC configuration information to realize a measurement of the cell to be measured.

In some embodiments of the present application, the SMTC configuration information includes: SMTC period information and SMTC measurement window related information.

In some embodiments of the present application, the SMTC measurement window related information includes: a starting position of the SMTC measurement window and window size information of the SMTC measurement window.

In some embodiments of the present application, the starting position of the SMTC measurement window includes: the starting position of each SMTC measurement window of the at least two SMTC measurement windows.

In some embodiments of the present application, the starting position of the SMTC measurement window includes: the starting position of a first SMTC measurement window of the at least two SMTC measurement windows.

In some embodiments of the present application, the window size information of the SMTC measurement window includes: there are SMTC measurement windows with different windows with different window sizes among the at least two SMTC measurement windows.

In some embodiments of the present application, the SMTC measurement window related information further includes: number of SMTC measurement windows.

In some embodiments of the present application, the window size information of the SMTC measurement window includes: the window size of each SMTC measurement window of the at least two SMTC measurement windows is a preset length.

In some embodiments of the present application, the SMTC measurement window related information further includes: a time interval between two adjacent SMTC measurement windows.

In some embodiments of the present application, the SMTC configuration information further includes: information of a cell to be measured.

In some embodiments of the present application, the information of the cell to be measured is information of a measurement cell shared by the at least two SMTC measurement windows.

In some embodiments of the present application, the information of the cell to be measured includes: information of a sub-cell to be measured corresponding to each SMTC measurement window of the at least two SMTC measurement windows.

In some embodiments of the present application, the terminal 2 further includes: a second determining part 22;

Where, the second determining part 22 is configured to determine the starting position of each SMTC measurement window of the at least two SMTC measurement windows according to the SMTC period information, the number of the windows, and the starting position of the first SMTC measurement window.

In some embodiments of the present application, the terminal 2 further includes: a second determining part 22; where, the second determining part 22 is configured to determine the starting position of each SMTC measurement window of the at least two SMTC measurements according to the SMTC period information, the time interval between the two adjacent SMTC measurement windows, and the starting position of the first SMTC measurement window.

In some embodiments of the present application, the terminal 2 further includes: a second determining part 22; where, the first determining part 22 is configured to determine the starting position of each SMTC measurement window of the at least two SMTC measurements according to the SMTC period information, the time interval between the two adjacent SMTC measurement windows, the starting position of the first SMTC measurement window and the number of the windows.

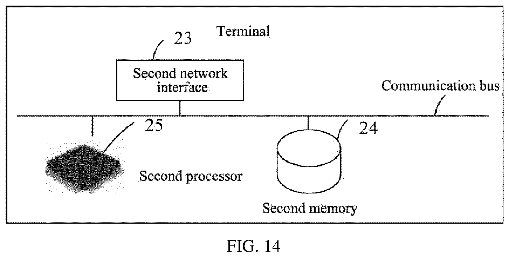

As shown in FIG. 14, an embodiment of the present application further provides a terminal which includes:

a second network interface 23, configured to receive and send a signal and information in a process of sending and receiving information with the terminal;
a second memory 24, configured to store executable configuration instructions; and
a second processor 25, configured to implement the configuration method executed on the terminal side when executing the executable configuration instructions stored in the second memory 24.

It should be noted that, in actual applications, various components in the access network device are coupled together through a communication bus. It can be understood that the communication bus is used to realize the connection and communication between these components. In addition to a data bus, the communication bus further includes a power bus, a control bus, and a status signal bus. However, for the sake of clarity, various buses may be referred to as communication buses.

An embodiment of the present application provides a computer readable storage medium that stores executable configuration instructions for causing the second processor to execute to implement the configuration method executed on the terminal side.

It can be understandable that when the network side device performs the synchronization signal block transmission configuration, it uses multiple SMTC measurement windows in an SMTC period to perform the synchronization signal block transmission. Therefore, when the network side device sends SSBs of different cells, multiple SMTC measurement windows can be used to send the SSBs of the different cells in the same time period, which improves the transmission efficiency of SSB and improves the timeliness and success rate of performing neighbor cell measurement based on the SSB by the terminal, that is, the efficiency and the success rate of the measurement are improved. The above are only preferred embodiments of the present application, and are not used to limit the protection scope of the present application.

When the network side device performs the synchronization signal block transmission configuration, it uses multiple SMTC measurement windows in an SMTC period to perform the synchronization signal block transmission. Therefore, when the network side device sends SSBs of different cells, multiple SMTC measurement windows can be used to send them in the same time period, which improves the transmission efficiency of the SSB. Then, the timeliness and success rate that the terminal can perform neighbor cell measurement based on the SSB are provided, that is, the efficiency and success rate of the measurement are improved.

**Claims**

1. A configuration method applied to a network side device, the method comprising:

configuring, in a measurement timing configuration based on a synchronization signal block (SMTC) period, at least two SMTC measurement windows to obtain SMTC configuration information; and
sending the SMTC configuration information to a terminal.

2. The method according to claim 1, wherein,
the SMTC configuration information comprises: SMTC period information and SMTC measurement window related information.

3. The method according to claim 2, wherein,
the SMTC measurement window related information comprises: a starting position of the SMTC measurement window and window size information of the SMTC measurement window.

4. The method according to claim 3, wherein,
the starting position of the SMTC measurement window comprises: the starting position of each SMTC measurement window of the at least two SMTC measurement windows.

5. The method according to claim 3, wherein,
the starting position of the SMTC measurement window comprises: the starting position of a first SMTC measurement window of the at least two SMTC measurement windows.

6. The method according to claim 4, wherein,

the window size information of the SMTC measurement window comprises: there are SMTC measurement windows with different window sizes among the at least two SMTC measurement windows.

7. The method according to claim 5, wherein,
the SMTC measurement window related information further comprises: number of SMTC measurement windows.

8. The method according to any one of claims 3 to 5 or claim 7, wherein,
the window size information of the SMTC measurement window comprises: the window size of each SMTC measurement window of the at least two SMTC measurement windows is a preset length.

9. The method according to claim 3, 5, 7 or 8, wherein,
the SMTC measurement window related information further comprises: a time interval between two adjacent SMTC measurement windows.

10. The method according to claim 2, wherein,
the SMTC configuration information further comprises: information of a cell to be measured.

11. The method according to claim 10, wherein,
the information of the cell to be measured is information of a measurement cell shared by the at least two SMTC measurement windows.

12. The method according to claim 10, wherein,
the information of the cell to be measured comprises: information of a sub-cell to be measured corresponding to each SMTC measurement window of the at least two SMTC measurement windows.

13. The method according to claim 7, wherein the method further comprises:
determining the starting position of each SMTC measurement window of the at least two SMTC measurement windows according to the SMTC period information, number of the windows, and the starting position of the first SMTC measurement window.

14. The method according to claim 9, wherein the method further comprises:
determining the starting position of each SMTC measurement window of the at least two SMTC measurement windows according to the SMTC period information, the time interval between the two adjacent SMTC measurement windows, and the starting position of the first SMTC measurement window.

15. The method according to claim 9, wherein the method further comprises:
determining the starting position of each SMTC measurement window of the at least two SMTC measurement windows according to the SMTC period information, the time interval between the two adjacent SMTC measurement windows, the starting position of the first SMTC measurement window and number of the windows.

16. The method according to any one of claims 13 to 15, wherein after the determining the starting position of each SMTC measurement window of the at least two SMTC measurement windows, the method further comprises:
sending the starting position of each SMTC measurement window as the SMTC configuration information to the terminal.

17. A configuration method applied to a terminal, the method comprising:

receiving SMTC configuration information; wherein the SMTC configuration information comprises configuration information obtained by configuring at least two SMTC measurement windows; and
detecting a synchronization signal block in the SMTC measurement window corresponding to a cell to be measured according to the SMTC configuration information to realize a measurement of the cell to be measured.

18. The method according to claim 17, wherein,
the SMTC configuration information comprises: SMTC period information and SMTC measurement window related information.

19. The method according to claim 18, wherein,
the SMTC measurement window related information comprises: a starting position of the SMTC measurement window and window size information of the SMTC measurement window.

20. The method according to claim 19, wherein,
the starting position of the SMTC measurement window comprises: the starting position of each SMTC measurement window of the at least two SMTC measurement windows.

21. The method according to claim 19, wherein,
the starting position of the SMTC measurement window comprises: the starting position of a first SMTC measurement window of the at least two SMTC measurement windows.

22. The method according to claim 20, wherein,
the window size information of the SMTC measurement window comprises: there are SMTC measurement windows with different window sizes among the at least two SMTC measurement windows.

23. The method according to claim 21, wherein,
the SMTC measurement window related information further comprises: number of SMTC measurement windows.

24. The method according to any one of claims 19 to 21 and 23, wherein,
the window size information of the SMTC measurement window comprises: the window size of each SMTC measurement window of the at least two SMTC measurement windows is a preset length.

25. The method according to any one of claim 19, 21, 23 or 24, wherein,
the SMTC measurement window related information further comprises: a time interval between two adjacent SMTC measurement windows.

26. The method according to claim 18, wherein,
the SMTC configuration information further comprises: information of a cell to be measured.

27. The method according to claim 26, wherein,
the information of the cell to be measured is information of a measurement cell shared by the at least two SMTC measurement windows.

28. The method according to claim 26, wherein,
the information of the cell to be measured comprises: information of a sub-cell to be measured corresponding to each SMTC measurement window of the at least two SMTC measurement windows.

29. The method according to claim 23, wherein the method further comprises:
determining the starting position of each SMTC measurement window of the at least two SMTC measurement windows according to the SMTC period information, number of the windows, and the starting position of the first SMTC measurement window.

30. The method according to claim 25, wherein the method further comprises:
determining the starting position of each SMTC measurement window of the at least two SMTC measurement windows according to the SMTC period information, the time interval between the two adjacent SMTC measurement windows, and the starting position of the first SMTC measurement window.

31. The method according to claim 25, wherein the method further comprises:
determining the starting position of each SMTC measurement window of the at least two SMTC measurement windows according to the SMTC period information, the time interval between the two adjacent SMTC measurement windows, the starting position of the first SMTC measurement window and number of the windows.

32. A network side device, comprising:

a configuration part, configured to configure, in a measurement timing configuration based on a synchronization signal block (SMTC) period, at least two SMTC measurement windows to obtain SMTC configuration information; and
a sending part, configured to send the SMTC configuration information to a terminal.

**33.** The device according to claim 32, wherein,
the SMTC configuration information comprises: SMTC period information and SMTC measurement window related information.

**34.** The device according to claim 33, wherein,
the SMTC measurement window related information comprises: a starting position of the SMTC measurement window and window size information of the SMTC measurement window.

**35.** The device according to claim 34, wherein,
the starting position of the SMTC measurement window comprises: the starting position of each SMTC measurement window of the at least two SMTC measurement windows.

**36.** The device according to claim 34, wherein,
the starting position of the SMTC measurement window comprises: the starting position of a first SMTC measurement window of the at least two SMTC measurement windows.

**37.** The device according to claim 35, wherein,
the window size information of the SMTC measurement window comprises: there are SMTC measurement windows with different window sizes among the at least two SMTC measurement windows.

**38.** The device according to claim 36, wherein,
the SMTC measurement window related information further comprises: number of SMTC measurement windows.

**39.** The device according to any one of claims 34 to 36 or claim 38, wherein,
the window size information of the SMTC measurement window comprises: the window size of each SMTC measurement window of the at least two SMTC measurement windows is a preset length.

**40.** The device according to claim 34, 36, 38, or 39, wherein,
the SMTC measurement window related information further comprises: a time interval between two adjacent SMTC measurement windows.

**41.** The device according to claim 33, wherein,
the SMTC configuration information further comprises: information of a cell to be measured.

**42.** The device according to claim 41, wherein,
the information of the cell to be measured is information of a measurement cell shared by the at least two SMTC measurement windows.

**43.** The device according to claim 41, wherein,
the information of the cell to be measured comprises: information of a sub-cell to be measured corresponding to each SMTC measurement window of the at least two SMTC measurement windows.

**44.** The device according to claim 38, wherein the network side device further comprises: a first determining part; wherein,
the first determining part is configured to determine the starting position of each SMTC measurement window of the at least two SMTC measurement windows according to the SMTC period information, number of the windows, and the starting position of the first SMTC measurement window.

**45.** The device according to claim 40, wherein the network side device further comprises: a first determining part; wherein,
the first determining part is configured to determine the starting position of each SMTC measurement window of the at least two SMTC measurement windows according to the SMTC period information, the time interval between the two adjacent SMTC measurement windows, and the starting position of the first SMTC measurement window.

**46.** The device according to claim 40, wherein the network side device further comprises: a first determining part; wherein,
the first determining part is configured to determine the starting position of each SMTC measurement window of the at least two SMTC measurement windows according to the SMTC period information, the time interval between the two adjacent SMTC measurement windows, the starting position of the first SMTC measurement window and number of the windows.

**47.** The device according to any one of claims 44 to 46, wherein,
the sending part is further configured to send the starting position of each SMTC measurement window as the SMTC configuration information to the terminal after determining the starting position of each SMTC measurement window of the at least two SMTC measurement windows.

**48.** A terminal, wherein,
a receiving part, configured to receive SMTC configuration information; wherein the SMTC configuration information comprises configuration information obtained by configuring at least two SMTC measurement windows; and
a detection part, configured to detect a synchronization signal block of the SMTC measurement window corresponding to a cell to be measured according to the SMTC configuration information to realize a measurement of the cell to be measured.

**49.** The terminal according to claim 48, wherein,
the SMTC configuration information comprises: SMTC period information and SMTC measurement window related information.

**50.** The terminal according to claim 49, wherein,
the SMTC measurement window related information comprises: a starting position of the SMTC measurement window and window size information of the SMTC measurement window.

**51.** The terminal according to claim 50, wherein,
the starting position of the SMTC measurement window comprises: the starting position of each SMTC measurement window of the at least two SMTC measurement windows.

**52.** The terminal of claim 50, wherein,
the starting position of the SMTC measurement window comprises: the starting position of a first SMTC measurement window of the at least two SMTC measurement windows.

**53.** The terminal according to claim 51, wherein,
the window size information of the SMTC measurement window comprises: there are SMTC measurement windows with different window sizes among the at least two SMTC measurement windows.

**54.** The terminal according to claim 52, wherein,
the SMTC measurement window related information further comprises: number of SMTC measurement windows.

**55.** The terminal according to any one of claims 50 to 52, and 54, wherein,
the window size information of the SMTC measurement window comprises: the window size of each SMTC measurement window of the at least two SMTC measurement windows is a preset length.

**56.** The terminal according to any one of claim 50, 52, 54 or 55, wherein,
the SMTC measurement window related information further comprises: a time interval between two adjacent SMTC measurement windows.

**57.** The terminal of claim 49, wherein,
the SMTC configuration information further comprises: information of a cell to be measured.

**58.** The terminal according to claim 57, wherein,
the information of the cell to be measured is information of a measurement cell shared by the at least two SMTC measurement windows.

**59.** The terminal according to claim 57, wherein,
the information of the cell to be measured comprises: information of a sub-cell to be measured corresponding to each SMTC measurement window of the at least two SMTC measurement windows.

**60.** The terminal according to claim 54, wherein the terminal further comprises: a second determining part; wherein,
the second determining part is configured to determine the starting position of each SMTC measurement window of the at least two SMTC measurement windows according to the SMTC period information, number of the windows, and the starting position of the first SMTC measurement window.

61. The terminal according to claim 55, wherein the terminal further comprises: a second determining part; wherein, the second determining part is configured to determine the starting position of each SMTC measurement window of the at least two SMTC measurement windows according to the SMTC period information, the time interval between the two adjacent SMTC measurement windows, and the starting position of the first SMTC measurement window.

62. The terminal according to claim 56, wherein the terminal further comprises: a second determining part; wherein, the second determining part is configured to determine the starting position of each SMTC measurement window of the at least two SMTC measurement windows according to the SMTC period information, the time interval between the two adjacent SMTC measurement windows, the starting position of the first SMTC measurement window and number of the windows.

63. A network side device, comprising:

   a first network interface, configured to receive and send a signal and information in a process of sending and receiving information with a terminal;
   a first memory, configured to store executable configuration instructions; and
   a first processor, configured to implement the method according to any one of claims 1 to 16 when executing the executable configuration instructions stored in the first memory.

64. A terminal, comprising:

   a second network interface, configured to receive and send a signal and information in a process of sending and receiving information with the terminal;
   a second memory, configured to store executable configuration instructions; and
   a second processor, configured to implement the method according to any one of claims 17 to 31 when executing the executable configuration instructions stored in the second memory.

65. A computer readable storage medium storing executable configuration instructions for causing the first processor to execute to implement the method any one of claims 1 to 17.

66. A computer readable storage medium storing executable configuration instructions for causing the second processor to execute to implement the method any one of claims 17 to 31.

FIG. 1

FIG. 2

| Configuring, in an SMTC period, at least two SMTC measurement windows to obtain SMTC configuration information | ~ S101 |
| --- | --- |
| Sending the SMTC configuration information to a terminal | ~ S102 |

FIG. 3

A synchroni-
zation signal
block sent by
a cell A

A synchroni-
zation signal
block sent
by a cell B

A synchroni-
zation signal
block sent by
a cell C

A synchroni-
zation signal
block sent
by a cell D

A synchroni-
zation signal
block sent
by a cell E

Measurement
window 1

Measurement
window 2

Measurement
window 3

SMTC cycle: 40ms
(when SCS is 30KHZ, a total of 80 slots)

FIG. 4

A synchroni-
zation signal
block sent by
the cell A

A synchroni-
zation signal
block sent by
the cell B

A synchroni-
zation signal
block sent by
the cell C

A synchroni-
zation signal
block sent by
the cell D

A synchroni-
zation signal
block sent by
the cell E

Measurement
window 1

Measurement
window 2

Measurement
window 3

SMTC cycle: 40ms
(when SCS is 30KHZ, a total of 80 slots)

FIG. 5

A synchroni-
zation signal
block sent by
the cell A

A synchroni-
zation signal
block sent by
the cell B

A synchroni-
zation signal
block sent by
the cell C

A synchroni-
zation signal
block sent by
the cell D

Measurement
window 1

Measurement
window 2

SMTC cycle: 40ms
(when SCS is 30KHZ, a total of 80 slots)

FIG. 6

A synchroni-
zation signal
block sent by
the cell A

A synchroni-
zation signal
block sent by
the cell B

A synchroni-
zation signal
block sent by
the cell C

A synchroni-
zation signal
block sent by
the cell D

A synchroni-
zation signal
block sent by
the cell E

A time interval between
two adjacent SMTC
measurement windows
is 10ms

Measurement
window 1

Measurement
window 2

Measurement
window 3

Measurement
window 4

SMTC cycle: 40ms
(when SCS is 30KHZ, a total of 80 slots)

FIG. 7

A synchroni-
zation
signal block
sent by the
cell A

A synchroni-
zation signal
block sent by
the cell B

A synchroni-
zation signal
block sent by
the cell C

A synchroni-
zation signal
block sent by
the cell D

The time interval
between two adjacent
SMTC measurement
windows is 10ms

Measurement
window 1

Measurement
window 2

SMTC cycle: 40ms
(when SCS is 30KHZ, a total of 80 slots)

FIG. 8

| Receiving SMTC configuration information; where the SMTC configuration information includes configuration information obtained by configuring at least two SMTC measurement windows | S201 |

| Detecting a synchronization signal block in the SMTC measurement window corresponding to a cell to be measured according to the SMTC configuration information to realize a measurement of the cell to be measured | S202 |

FIG. 9

Terminal                                    Network
                                            side device

S301. Configuring, by the network side device,
at least two SMTC measurement windows
in an SMTC period to obtain SMTC
configuration information

S302: Sending, by the network side
device, the SMTC configuration
information to the terminal

S303.Detecting, by the terminal, the
synchronization signal block in the SMTC
measurement window corresponding to the cell to be
measured according to the SMTC configuration information
to realize the measurement of the cell to be measured

FIG. 10

Configuration part 10

Sending part 11

Network side device 1

FIG. 11

Network side device

13

First network
interface

Communication bus

15

First processor

14

First memory

FIG. 12

Receiving part 20

Detection part 21

Terminal 2

FIG.13

FIG. 14

## INTERNATIONAL SEARCH REPORT

| | International application No. |
|---|---|
| | **PCT/CN2018/109198** |

**A. CLASSIFICATION OF SUBJECT MATTER**

H04W 24/00(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 配置, 测量, 时序, 时间, 定时, 同步信号块, SS块, 周期, 窗口, 起始, 位置, 小区, 网络侧, 用户设备, 主同步信号, 辅同步信号; 5G, SS block, SSB, UE, configuration, radio, network, measurement, gap, synchronization signal block, PBCH, tim+ , period+, PSS, SSS, primary, secondary, reference, cell.

**C. DOCUMENTS CONSIDERED TO BE RELEVANT**

| Category* | Citation of document, with indication, where appropriate, of the relevant passages | Relevant to claim No. |
|---|---|---|
| X | CN 108282794 A (HUAWEI TECHNOLOGIES CO., LTD.) 13 July 2018 (2018-07-13) description, paragraphs [0090]-[0325], and figures 2-8 | 1-66 |
| A | CN 107278383 A (BEIJING XIAOMI MOBILE SOFTWARE CO., LTD.) 20 October 2017 (2017-10-20) entire document | 1-66 |
| A | CN 108111276 A (ZTE CORPORATION) 01 June 2018 (2018-06-01) entire document | 1-66 |
| A | WO 2017067688 A1 (TELEFONAKTIEBOLAGET LM ERICSSON PUBL) 27 April 2017 (2017-04-27) entire document | 1-66 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 May 2019** | **27 June 2019** |

| Name and mailing address of the ISA/CN | Authorized officer |
|---|---|
| **State Intellectual Property Office of the P. R. China** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/109198**

| Patent document cited in search report | | | Publication date (day/month/year) | Patent family member(s) | | | Publication date (day/month/year) |
|---|---|---|---|---|---|---|---|
| CN | 108282794 | A | 13 July 2018 | WO | 2018126847 | A1 | 12 July 2018 |
| CN | 107278383 | A | 20 October 2017 | WO | 2018176222 | A1 | 04 October 2018 |
| CN | 108111276 | A | 01 June 2018 | WO | 2019029328 | A1 | 14 February 2019 |
| WO | 2017067688 | A1 | 27 April 2017 | US | 2018324683 | A1 | 08 November 2018 |
| | | | | CN | 108353369 | A | 31 July 2018 |
| | | | | EP | 3366068 | A1 | 29 August 2018 |

Form PCT/ISA/210 (patent family annex) (January 2015)